# EUROPEAN PATENT APPLICATION

(11) **EP 1 935 788 A1**
(43) Date of publication of application: **25.06.2008**
(21) Application number: 06381057.6
(22) Date of filing: 21.12.2006
(51) Int. Cl.: B65B 25/06, B25J 15/00

(54) **Means for transferring foodstuffs in machines**

(71) Applicant: Monente Plösser, Francisco, 08396 Sant Cebría de Vallalta (ES)
(72) Inventor: Monente Plösser, Francisco, 08396 Sant Cebría de Vallalta (ES)
(74) Representative: Esteban Perez-Serrano, Maria Isabel

(57) **Abstract**

The present invention refers to a means (1) for transferring foodstuffs in machines from among the different means of preparation for the final packaging of cut foodstuffs based on at least a series of discontinuous means of from a collector robot which picks up slices or slivers from various conveyors (2,3,4) of cut products and conveys them to the recipients (6) of the conveyor of a packing machine, reducing the surface contact with the actual products and thus said products do not need to be completely in contact with the means for transferring and in this way the final quality of the packaged product is increased as the adherence to and remains of products in those means are avoided.

## Description

### OBJECT OF THE INVENTION

The present invention refers to a means for transferring foodstuffs in machines from among the different means of preparation for the final packaging of cut foodstuffs.

This invention is characterised in that it has a special construction of said means based on at least one series of discontinuous transferring means of a collector robot which picks up slices or slivers from various conveyor belts of cut products and transfers them to recipients of the conveyor belt of a packing machine.

Due to its special configuration the means for transferring reduces the contact surface of the actual products and thus they do not need to be completely in contact with the means for transferring, and in this way the final quality of the packaged product is increased, since adherence and remains of products in the means for transferring are avoided.

### BACKGROUND TO THE INVENTION

The packaging process of cooked meats, cheeses, hams, pate and other pre-cut foods normally requires essential handling in specific points of the cutting or packaging procedure, with concomitant sanitary disadvantages.

Another disadvantage in the present state of the art is the slowness and repetitiveness of the manual work which usually causes inconvenience in production.

In large-scale production installations the feed belt system which is slightly tilted is caused to coincide with the packing machine belt so that complete blocks of files and columns are deposited in a totally simultaneous manner, hardly affecting the position of the product due to the shallow depth of the recipient.

In small installations and transversal to the feed belts of the cut product, other belts are arranged to collect the product and in a new break up of the conveyance line the product is transferred to the packng line.

In addition, European Patent application with publication number EP1698557 is known, relating to other means of transferring foodstuffs from cutting machines to packing machines, filed in the name of this applicant, where a robot carries product transfer belts.

In the previous system, the transferring means are in contact with the whole surface of the product and therefore the possibility that part of the product will adhere to the surface of the belt is highly likely, and these product remains pass to the following group of foods passing on the belts, with loss of product quality.

The applicant is unaware of the existence of automatic means for handling slices, portions and slivers of foodstuffs which resolve the aforementioned problem, with the simplicity and effectiveness of the invention which will be described below, using a robot which does not operate with belts but which carries discontinuous means of transferring the foodstuffs.

### DESCRIPTION OF THE INVENTION

The present invention refers to a means for transferring foodstuffs in machines from among all the different collaboration means in the reception and preparation on trays for final packaging of these pre-cut foodstuffs.

This invention is characterised in that the special construction of these means is based on at least one series of discontinuous means of a robot which collects the slices or slivers from various conveyors of cut products and their transfer to the recipients of a packing machine.

The robot which is not the object of the invention, interacts with a detector system situated on the cut product conveyor which makes it possible to ascertain the state of load of the discontinuous means for transferring foodstuffs, the means of regulating the speed and synchronicity of these, as well as controlling the ideal dimension of the foodstuff received.

The reversible movement discontinuous means have intermediaries between the two groups of previous conveyors due to the movement of the robot's arm and they remain in repose with respect to the robot's arm when they receive the products from the conveyors since it is the robot which is displaced backwards producing the same effect as if the robot's arm were permanently in repose and the discontinuous means were moving.

Subsequently the robot's arm moves towards the recipient conveyors and the discontinuous means rotate to deposit the product in said recipients.

In this way the discontinuous means which include rollers, belts or similar reduce the contact surface with the actual products and therefore they do not have to be completely in contact with the means for transferring and in this way the final quality of the packaged product is increased, as adherence and remains of products in said transferring means are avoided.

For this reason the product remains which may be deposited on the discontinuous means fall rapidly through gravity to lower trays which are subsequently removed for disposal of the product remains, thus spending a minimum time in contact with said discontinuous transferring means.

In addition, the transferring means permit the incorporation of various robots to the same packaging process in an alternate arrangement so that the collection and deposit of products do not interfere with the process and conversely, packaging is accelerated in adequate synchronicity thus avoiding any jumps in feeding from the various means for transferring the pre-cut products.

The whole invention is completed with mechanical demarcations, a group of sensors and the appropriate connections.

### DESCRIPTION OF THE DRAWING

The present descriptive report is completed by a set of drawings which illustrate a preferred example but which is in no way is restrictive of the invention.

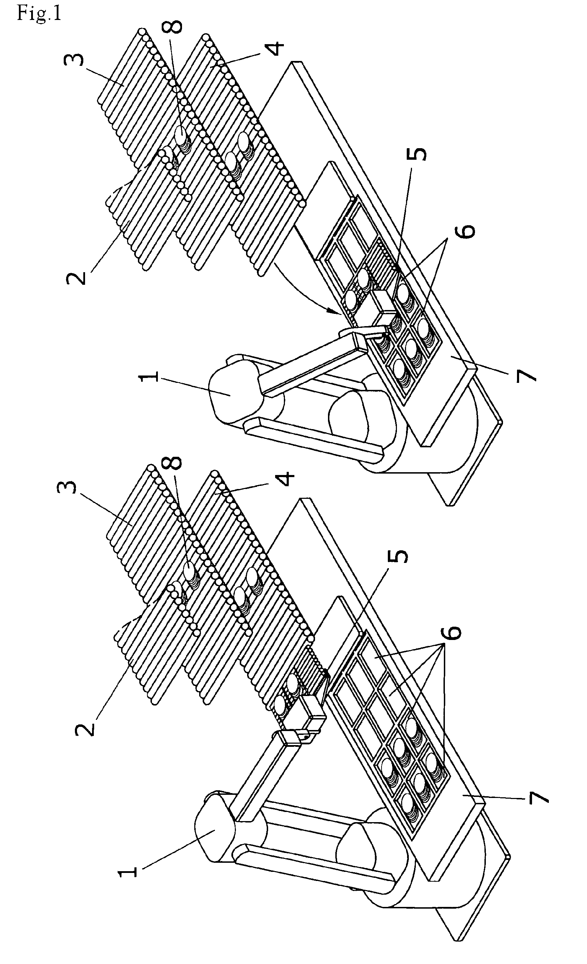

Figure 1 shows a view of one of the robots in perspective in two successive views of its action, taking products from one of the means for feeding products where the means for transferring consist of a group of rollers, and in discontinuous lines, the position of the arm depositing these products on the recipient conveyor means.

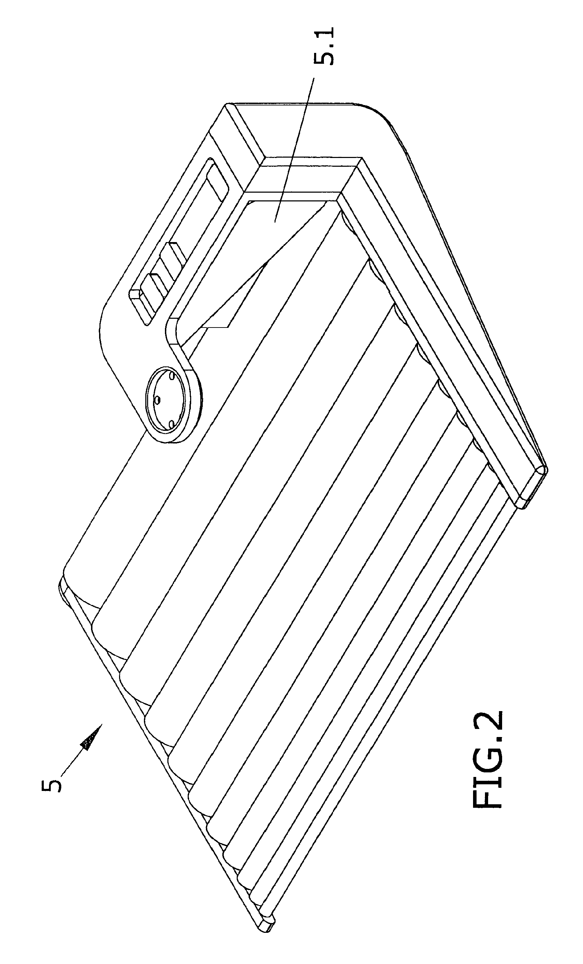

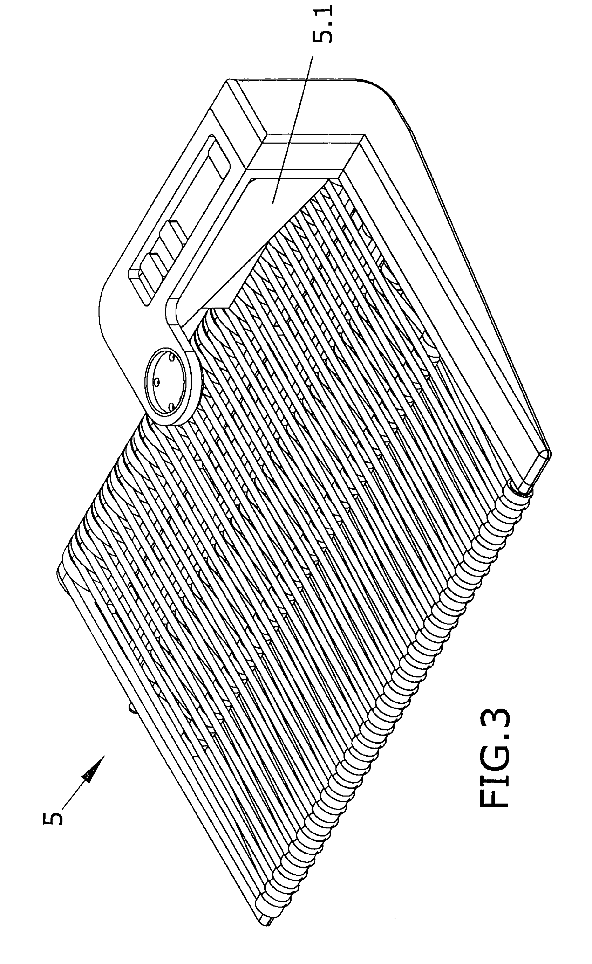

Figure 2 shows a detail of a group of rollers which comprise the discontinuous transferring means of the present invention.

### PREFERRED EMBODIMENT OF THE INVENTION

In view of the foregoing, the present invention refers to means for transferring foodstuffs in machines from among the different collaborating means for handling these products with at least one robot (1) which collects the products (8) in slices, portions or slivers, in alignment on various conveyors (2), (3), and(4) at different levels using intermediate discontinuous conveyors (5) for transferring these products (8) to the recipients (6) of a packing machine (7), having longitudinal axes in all the conveyors (2), (3), (4), and (5) preferably in the same vertical plane passing through the longitudinal axis of the packing machine so that the intermediate discontinuous conveyors (5) of reversible rotation remain in repose in respect of the robot's arm when they receive the products from the conveyors since it is the robot which moves backwards and moves while the robot's arm (1) is tilted forward and brought nearer to the recipients (6) facilitating with this rotation the piling in lines of products (8) of the same or different type.

The robot (1) incorporates a detector system which in this example of a preferred embodiment is an artificial vision mechanism which detects the ideal dimension of the product (8) and, given its possibility of discontinuous feeding the existence or not of the same on each column of the conveyors (2), (3) and (4) at the time of a specific collection, and also has means for regulating the speed and synchronicity of the conveyors 2), (3) and (4) as well as the appropriate means for synchronised coordination between robots (1) when the packing machine (7)is provided with several of these, alternating the collection of the products (8) brought by the conveyors (2), (39 and (4) and in the depositing of same in the recipients (6).

In addition, the detector system may also be a photo cell which indicates to the robot (1) the arrival of the product (8).

The discontinuous intermediate conveyors (5) are multiple and are provided with one or various servomotors (5.1) and one or various axes distributed along their width.

The invention is completed with mechanical demarcations integrated in the vicinity of the machine and which protect its perimeter, for example in the polycarbonate enclosure, outside the figures, apart from a group of sensor which assist in the packaging management, for example, detecting portions or slices collected and not loaded or loaded and not packaged, saturation of products (8) on the conveyors (2) (3) and (4) in order of operation, indication of recipient filling etc.

In a first example of the preferred embodiment the conveyors (2), (3), (4) and (5) are rollers, the axis of the product.
In a second example of a preferred embodiment the conveyors (2), (3), (4) and (5) are belts arranged in a manner perpendicular to the forward direction of the product.

In a third example of a preferred embodiment, the discontinuous conveyors are rollers arranged with the axis forming 90° with the forward direction of the product at the moment of its collection from the conveyors (2), (3), (4) and (5).

In a fourth example of a preferred embodiment the discontinuous conveyors are belts arranged parallel to the forward direction of the product at the moment of its collection from the conveyors (2), (3), (4) and (5).

The essential nature of the invention is centred on the transferring means in foodstuff machines from among the different collaborative means for handling these products with at least one robot (1) for picking up products (8) in slices, portions or slivers, aligned on various conveyors (2), (3) and (4) at different levels using intermediate conveyors (5) for conveying these products (8) to the recipients (6) of a packing machine (7) characterised in that the intermediate conveyors (5) are discontinuous, so that any remains of the product which may be deposited on them (5) fall rapidly due to gravity and are subsequently disposed of.

Variations in materials, form, size and arrangement of the component elements do not alter the essential nature of this invention as these are described in a non-restrictive manner sufficient for an expert to proceed to its reproduction.

## Claims

1. Means for transferring foodstuffs in machines from among the different means collaborating in the handling of these products with at least one robot (1)which picks up the products (8) in slices, portions or slivers, aligned on various conveyors (2), (3) and (4) at a different level, by means of intermediate conveyors (5) for conveying these products (8) to the recipients (6) of the packing machine (7) **characterised in that** the intermediate conveyors are discontinuous, so that any product remains which may be deposited on them (5) fall rapidly through gravity and are subsequently disposed of.

2. Means for transferring foodstuffs in machines according to claim 1 **characterised in that** the conveyors (2), (3), and (4) at a different level are discontinuous.

3. Means for transferring foodstuffs in machines according to claim 2 **characterised in that** the discontinuous conveyors (2), (3), and (4) are rollers whose axis is parallel to the forward direction of the product.

4. Means for transferring foodstuffs in machines according to claim 2 **characterised in that** the discontinuous transport means (2), (3), and (4) and (5) are belts arranged perpendicularly to the forward direction of the product.

5. Means for transferring foodstuffs in machines according to claim 1 **characterised in that** the longitudinal axis of all the conveyors (2), (3), (4) and (5) are arranged in the same vertical plane passing trough the longitudinal axis of the packing machine so that the intermediate discontinuous conveyor (5) of reversible rotation repeats the rotation direction of the conveyors (2), (3), and (4) of the products when it is arranged immediately below the final extremity of said conveyors and rotates in reverse direction, contrary to the displacement of the robot's arm (1) while this is tilted forward and brought nearer to the recipients (6), facilitating with this inverse rotation the piling of products (8) on the lines of said recipients of the same or of a different type.

6. Means for transferring foodstuffs in machines according to claim 1 **characterised in that** the robot (1) incorporates a system for detecting the ideal dimension of the product (8) and, given its possibility of discontinuous feeding, the existence or not of the same on each column of the conveyors (2), (3) and (4) at the moment of a specific collection, as well as being provided with means for regulating the speed and synchronicity of the conveyors (2), (3), (4) and (5) as well as the appropriate means for synchronised coordination between robots (1) when the same packing machine (7) has several of these alternating in the collection of products (8) brought by the conveyors (2), (3), and (4) and in the deposit of said products in the recipients (6).

7. Means for transferring foodstuffs in machines according to claim 1 **characterised in that** the intermediate discontinuous conveyors (5) are multiple and have a single servomotor (5.1) and a sole axis common to all the rollers or belts throughout the width.

8. Means for transferring foodstuffs in machines according to claim 1 **characterised in that** the intermediate discontinuous conveyors (5) are multiple and have various servomotors (5.1) and various axes throughout the width.

9. Means for transferring foodstuffs in machines according to claim 6 **characterised in that** the detector system is an artificial vision mechanism.

10. Means for transferring foodstuffs in machines according to claim 6 **characterised in that** the detector system is a photo cell.

11. Means for transferring foodstuffs in machines according to claim 1 **characterised in that** the discontinuous conveyors (5) are rollers arranged with an axis from a 90° angle with the forward direction of the product at the moment of collection from the conveyors (2), (3) and (4).

12. Means for transferring foodstuffs in machines according to claim 1 **characterised in that** the discontinuous conveyors (5) are belts arranged parallel to the forward direction of the product at the moment of collection from the conveyors (2), (3) and (4).
